# EUROPEAN PATENT SPECIFICATION

(11) **EP 0 624 810 B1**
(45) Date of publication and mention of the grant of the patent: **01.08.2001**
(21) Application number: 94107485.8
(22) Date of filing: 13.05.1994
(51) Int. Cl.: G02B 6/38

(54) **Optical fiber connector unit and optical fiber connector**
Baugruppe für Glasfaserverbindung und Glasfaserstecker
Unité de connexion à fibre optique et connecteur à fibre optique

(30) Priority: 14.05.1993 JP 11255293; 20.05.1993 JP 11833393
(43) Date of publication of application: 17.11.1994
(73) Proprietor: NIPPON TELEGRAPH AND TELEPHONE CORPORATION, Shinjuku-ku, Tokyo 163-19 (JP)
(72) Inventor: Yoshizawa, Takashi, Hidaka-shi, Saitama (JP); Oguchi, Shigemitsu, Saitama (JP); Nagayama, Akira, Tokyo (JP); Kanayama, Kazunori, Tokyo (JP); Kato, Kuniharu, Naka-gun, Ibaraki (JP); Ando, Yasuhiro, Houya-shi, Tokyo (JP)
(74) Representative: Stebbing, Timothy Charles

(56) References cited:
- EP-A- 0 216 643
- EP-A- 0 223 608
- WO-A-88/07691
- GB-A- 2 112 170
- US-A- 4 240 695
- US-A- 4 804 243
- US-A- 4 944 568
- PATENT ABSTRACTS OF JAPAN vol. 011, no. 035 (P-542), 3 February 1987 & JP-A-61 204608 (HITACHI LTD;OTHERS: 03), 10 September 1986,

## Description

The present invention relates to an optical fiber connector unit which, in a process for assembling an optical fiber connector with an optical fiber cord (hereinafter referred to as "assembly"), is able to simplify the assembly in an automatic assembly line and provide labor-saving in the assembly by a manual work, and to an optical fiber connector having the optical fiber connector unit.

In contrast to fusion splicing for permanently connecting optical fibers, an optical connector is a joining device capable of detachably connecting optical fibers with one another, and there have heretofore been used various types of optical connectors which can easily connect and disconnect optical fibers.

To promote further popularization of wide area information services including video information to individual homes and offices, an economical optical fiber connector is essential. Heretofore, an optical fiber connector is composed of a number of parts, which have been highly dependent on manual work for assembly. As a result, 50% of the total cost is accounted for by the assembly cost, which has impeded reducing the cost of the optical fiber connector. Therefore, in order to meet large amounts of needs for optical connectors in the future and provide an economical optical fiber connector, it is necessary to automate the assembly work, thereby improving the productivity and reducing the assembly cost.

To achieve an automatic assembly apparatus for optical fiber connector at a reasonable cost, it is necessary to simplify the mechanism and assembly process as much as possible. For this purpose, it is preferable to reduce the number of components of the optical fiber connector and simplify the structure of the connector so that the assembly process can be simplified.

Main optical fiber connectors which are presently being used are broadly divided into a bayonet fastening such as an ST-type connector and a push-pull fastening type such as an SC-type connector.

The ST-type connector, which was developed by AT & T of the United States, has a structure in which a ferrule and a spring are preassembled with a bayonet coupling nut, and the three parts (ferrule, spring, and coupling nut) are integrated and supplied.

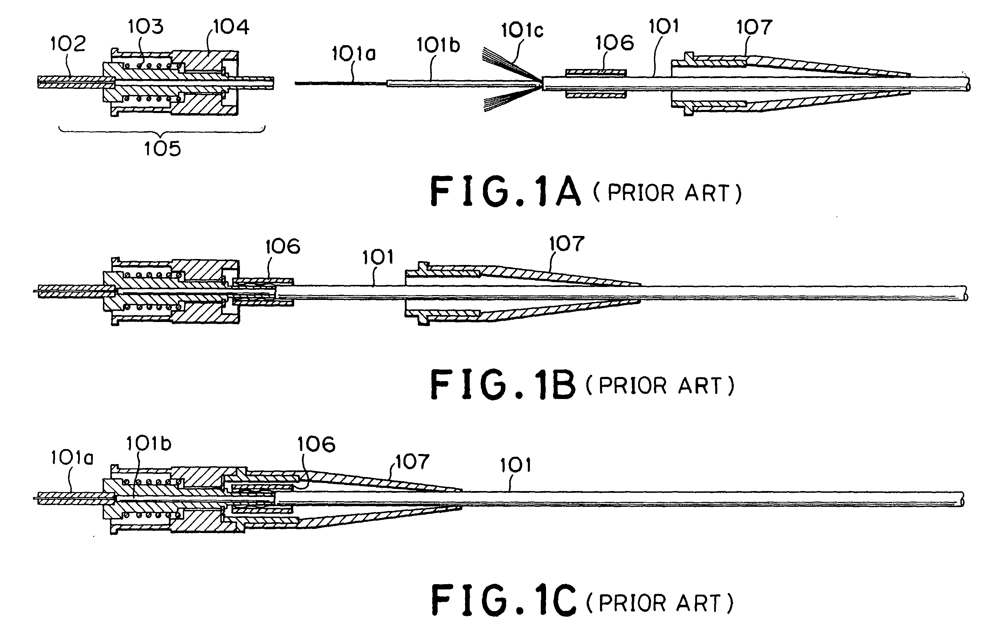

Figs. 1A to 1C are schematic views showing the connector structure and assembly procedure of the ST-type connector. As shown in Figs. 1A to 1C, a ferrule to hold an optical fiber 101a and an optical fiber strand 101b having a jacket is previously incorporated in a bayonet type coupling nut 104 together with a spring 103 to form a plug unit 105. The optical fiber cord 101 is retained to the ferrule 102 of the plug unit 105 through a crimp ring 106, and a hood 107 for protecting the retained portion is engaged with the coupling nut 104 to construct an optical fiber connector.

In assembling such an ST-type optical fiber connector, as shown in Fig. 1A, after the optical fiber cord 101 is inserted into the hood 107 and the crimp ring 106, a sheath of the end portion, a strand jacket of the optical fiber strand 101b, and a primary coating are removed to expose the optical fiber 101a. A tension member 101c, an aromatic polyamide Kevlar®, is cut and formed properly. Then, as shown in Fig. 1B, the optical fiber 101a and the optical fiber strand 101b are inserted into the ferrule 102 filled with an adhesive and are fixed therein. The tension member 101c is put over the rear end of the ferrule 102, the crimp ring 106 is engaged on it, and the crimp ring 106 is crimped to retain it to the rear end of the ferrule 102. Finally, as shown in Fig. 1C, the hood 107 is engaged with the coupling nut 104 to cover the crimp ring 106.

Since the ST-type connector comprises three parts (the ferrule 102, the spring 103, and the coupling nut 104), the assembly time can be reduced. However, since the ST-type connector uses the tension member 101c, which resists against an external force applied to the optical fiber cord 101 to protect the optical fiber strand 101b, retained directly to the ferrule 102, when an external force is applied to the optical fiber cord 101, a small gap is generated between the ferrule end faces closely contacted with each other for connection, which may break optical signals. Furthermore, the ST-type connector has a defect in that it is directly affected by an eccentric error generated in the production of the ferrule and the optical fiber. That is, when ST-type connectors differing in eccentric direction are connected, a deviation occurs between cores of the abutted optical fibers in the ferrules, which increases insertion loss (the insertion loss is the largest in the worst case where eccentric directions differ by 180 degrees).

An F04 type single-core optical fiber connector (JIS 5973, hereinafter referred to as "SC-type connector") which solves the problems of open circuit and an increase in insertion loss seen in the ST-type connector has a floating mechanism in which the ferrule floats from a stopring, and incorporates a core eccentricity adjusting mechanism for adjusting eccentricity in itself. As a result, the SC-type connector has become used worldwide as a high-precision and reliable optical communication connector.

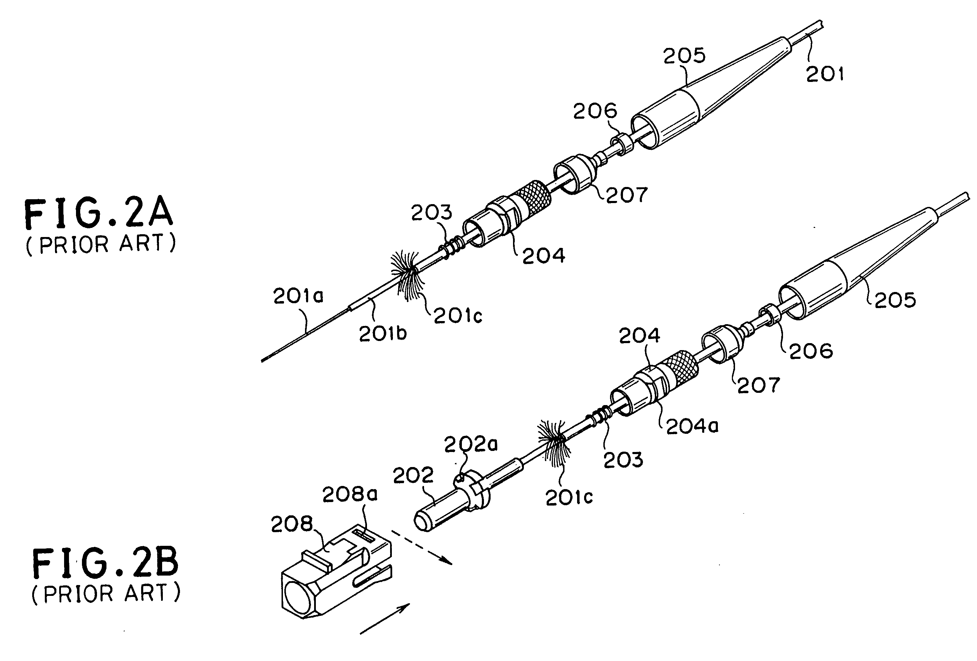

Fig. 2A and Fig. 2B are schematic views showing a structure and an assembly process of the SC-type connector. As shown in Figs. 2A and 2B, the SC-type connector has a ferrule 202, a spring 203, a stopring 204, a boot 205, a ring 206, and a crimp ring 207 as parts to be assembled with an optical fiber cord, and comprises a plug frame 208 retained to the stopring 204.

Here, structures of the stopring 204 and the plug frame 208 will be described in detail.

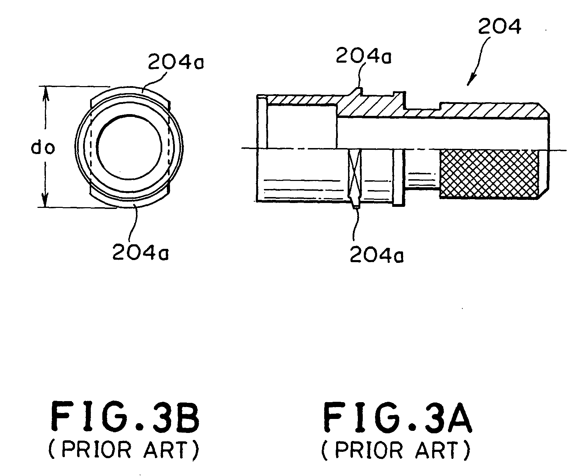

Fig. 3A is a partly cutaway schematic front view showing the stopring 204, Fig. 3B is its left side view. As shown in the Figs. 3A and 3B, the stopring 204 has protrusions 204a projecting in the radial direction at two positions opposing each other on the outer peripheral surface.

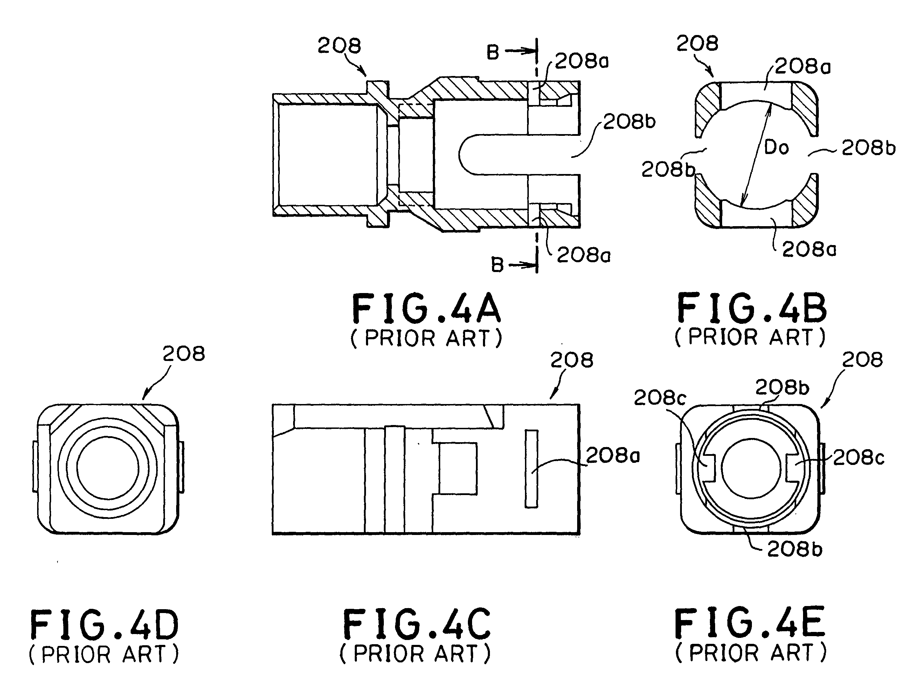

Fig. 4A is a schematic longitudinal sectional view of a plug frame 208, Fig. 4B is its cross sectional view taken along line A-A, Fig. 4C is a schematic front view of Fig. 4A, Fig. 4D is a schematic left side view of Fig. 4C, and Fig. 4E is a schematic right side view of Fig. 4C. As shown in Figs. 4A to 4E, two positions opposing each other on the inner peripheral surface of the plug frame 208 are provided with holes 208a where projections 204a of the stopring 204 are inserted. An inner diameter D₀ between the holes 208a is set smaller than an outer diameter d₀ (see Fig. 3) between the projections 204a of the stopring 204. The plug frame 208 has a cutout 208b from an opening end over the axial direction at a position of 90 degrees from the holes 208a in the peripheral direction to allow elastic deformation of the plug frame 208 to open the opening.

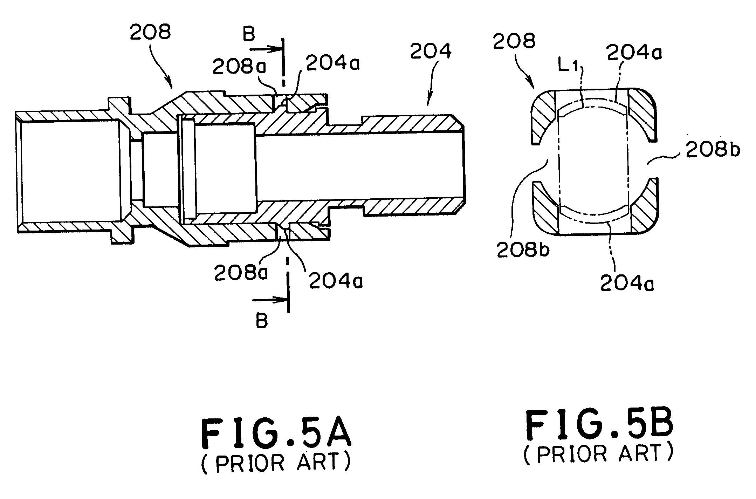

With the opening of the plug frame 208 opened, the stopring 204 is inserted into the plug frame 208 and, with its projection 204a inserted in the hole 208a, an external force is removed to return the plug frame 208 to the original position by its elasticity so that the stopring 204 is retained through the projection 204a to the plug frame 208, as shown in Figs. 5A and 5B.

In assembling the SC-type connector having the stopring 204 and the plug frame 208, first, as shown in Fig. 2A, the optical fiber cord 201 inserted into the stopring 204 and the coil spring 203 along with the boot 205, the ring 206, and the crimp ring 207 is pretreated to remove the sheath, jacket and the primary coating such that the optical fiber 201a, the optical fiber strand 201b, and the tension member 201c are exposed. Then, as shown in Fig. 2B, the ferrule 202 which is separately supplied is bonded to the tip of the optical fiber cord 201. In this condition, the individual inserted parts are held with the insertion positions undetermined relative to the optical fiber cord 201.

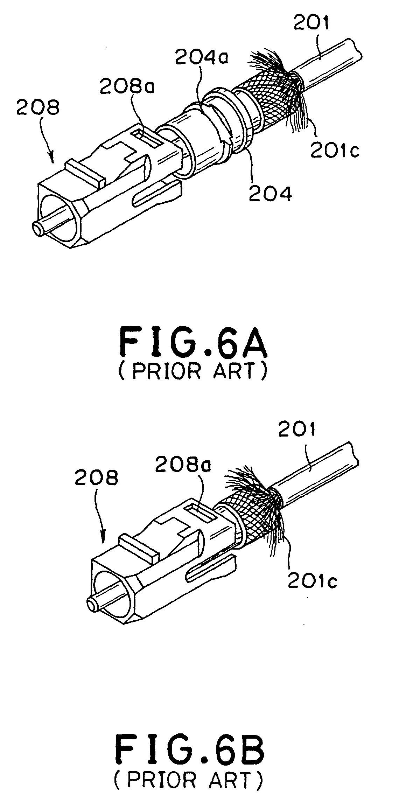

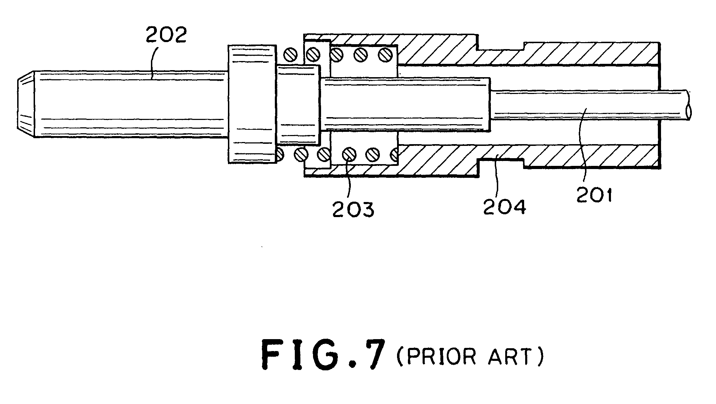

After that, a core adjusting step is performed for the ferrule polished to a convex-curved surface. Specifically, to set the eccentric direction to a nearly constant direction to the plug frame 208 with respect to the center of the ferrule 202, the ferrule 202 is positioned (a first rotational position) so that the flange cutout 202a of the ferrule 202 and the inner projection 208c (see Fig. 4E) of the plug frame 208 are in line. Then, the coil spring 203 and the stopring 204 are released to assemble the parts. At this moment, the stopring 204 is positioned again (a second rotational position) so that the two projections 204a provided on the stopring 204 are engaged with the holes 208a of the plug frame 208, and inserted as shown in Fig. 6B. Fig. 7 shows relative positions in a virtual assembly condition during the assembly work of the optical fiber cord 101, the stopring 104, the spring 103, and the ferrule 102. The assembly work at this time is all performed manually.

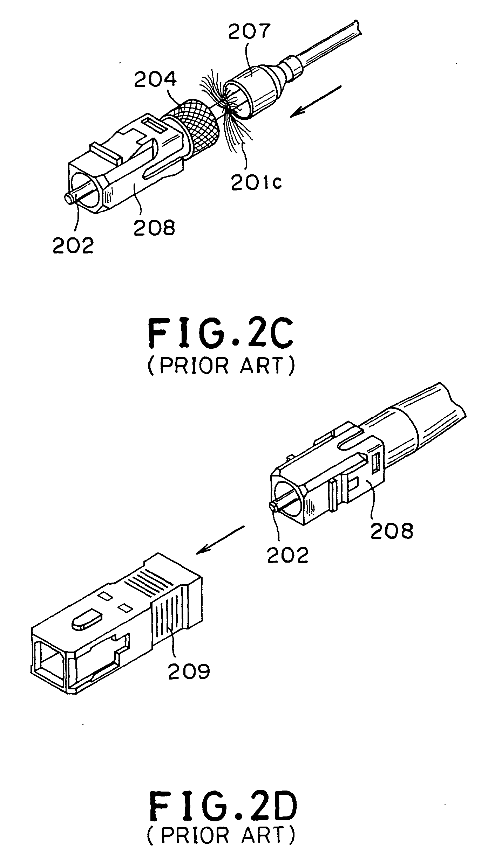

With the condition shown in Fig. 6B, as shown in Fig. 2C, the crimp ring 207 is crimped with the tension member 201c of the optical fiber cord 201 inserted between the stopring 204 and the crimp ring 207 to retain the cord. The boot 205 is set in position. In this case, the ring 206 is used to retain an excess of the sheath to the end of the crimp ring 207, an adhesive may be used in place of the ring 206. Finally, a coupling device and the like are assembled as shown in Fig. 2D. In such a coupling condition, the ferrule 202 is pressed to the left direction in Fig. 2 by a spring force of the coil spring 203 of which an end contacts with the stopring 2, and floatingly supported to the stopring 204 through the coil spring 203.

To automate the above-described assembly process of the conventional SC-type connector, insertion positions of the individual part inserting to the optical fiber cord 201 must be exactly determined. However, there has been a problem in that when a large number of parts insert to a flexible object such as the optical fiber cord 201, it is very difficult to mechanically recognize the positions of the inserting parts, which has impeded automation of the assembly. Further, in manual assembly, a large number of parts must be handled, requiring a tedious work. In particular, in a field assembly for assembling an optical fiber connector to a LAN optical fiber cord in an intelligent building using the optical fiber cord 201 as a communication medium, the number of parts to be handled in the field is increased, and the construction time is considerably increased.

Furthermore, in the core adjusting step, two positioning steps of the core adjusting step (first rotational positioning) and the stopring 204 positioning (second rotational positioning) have been required to the plug frame 208, making it difficult to automate the assembly work.

WO 88/07691 published 6.10.1988, discloses a fiber optical connector with axially floating ferrule, where the ferrule movement is limited through a rear boss of the ferrule, contacting a rear section of a barrel. Retention tines locate the barrel in the connector housing.

To eliminate the above prior art defects, a primary object of the present invention is to provide an optical fiber connector unit which facilitates construction of an automatic assembly line and enables an easy manual assembly work.

Another object of the present invention is to provide an optical fiber connector which facilitates construction of an automatic assembly line and enables an easy manual assembly work.

According to a first aspect of the present invention, there is provided an optical fiber connector unit as defined in claim 1.

Here, the first stopper of the locating member may comprise a cylindrical portion with a portion cut out parallel to the axial direction, the second stopper may comprise a plurality of nibs projecting inclining towards inside in the radial direction from the cylindrical portion along a direction towards the rear end of the ferrule and capable of elastic deformation for allowing the second flange of the ferrule to pass in a direction of increasing spring force.

The locating member may be pressed on an inner peripheral surface of the stopring by elastic deformation of the cylindrical portion.

The nibs of the locating member may be formed on the cylindrical portion by cutting out halfway the cylindrical portion.

The nibs of the locating member may be formed projecting from one end of the cylindrical portion.

The second stopper of the locating member may comprise a cylindrical portion with a portion cut out parallel to the axial direction and capable of elastic deformation for allowing the second flange of the ferrule to pass in a direction of increasing spring force, and the first stopper may comprise a plurality of nibs projecting inclining towards outside in the radial direction from the cylindrical portion along a direction towards the coupling end of the ferrule.

The locating member may be pressed on an inner peripheral surface of the stopring by elastic deformation of the nibs.

The locating member may be pressed on an outer peripheral surface of the ferrule by elastic deformation of the cylindrical portion.

According to a second aspect of the present invention, there is provided an optical fiber connector comprising:
an optical fiber connector according to claim 1;
an optical fiber cord having an optical fiber
mounted to said ferrule;
a crimp ring for bonding a tension member of said optical fiber cord to a rear end of said stopring;
a boot for covering said crimp ring bonded to the rear end of said stopring; and
a plug frame engaging with an outer periphery of said stopring.

In the optical fiber connector unit of the present invention having the above construction, since its second flange of the ferrule contacts against a locating member, and the ferrule is regulated to move in a direction of decreasing spring force, the ferrule can be integrated with the stopring and the spring even before assembling an optical fiber connector.

Furthermore, in the optical fiber connector having the optical fiber unit, since the ferrule contacts with another ferrule when an optical fiber cord is connected to the plug unit, and the ferrule can be moved against the spring force of the spring in the direction of increasing spring force, the ferrule is kept in a floating condition to the stopring.

With the optical fiber connector having the spring and the plug frame of the above construction, the stopring can be inserted into the plug frame independent of its positional condition and, after the insertion, its projection contacts against the protrusion of the plug frame to prevent disconnection.

The above and other objects, effects, features and advantages of the present invention will become more apparent from the following description of embodiments thereof taken in conjunction with the accompanying drawings.
Figs. 1A to 1C are schematic views showing the structure and the assembly procedure of the ST-type connector, respectively;
Figs. 2A to 2D are schematic views showing the structure and the assembly procedure of the SC-type connector, respectively;
Fig. 3A is a partly cutaway schematic front view showing the stopring of the SC-type connector;
Fig. 3B is a schematic left side view of Fig. 3A;
Fig. 4A is a schematic longitudinal sectional view showing the plug frame of the SC-type connector;
Fig. 4B is a schematic cross sectional view taken along line A-A in Fig. 4A;
Fig. 4C is a schematic front view of Fig. 4A;
Fig. 4D is a schematic left side view of Fig. 4A;
Fig. 4E is a schematic right side view of Fig. 4A;
Fig. 5A is a schematic longitudinal sectional view showing part of the connected SC-type connector;
Fig. 5B is a schematic cross sectional view taken along line B-B of Fig. 5A, showing the position of the protrusion by phantom lines (chain double-dashed line) L₁ in Fig. 4B;
Fig. 6A is a schematic perspective view showing the connected SC-type connector, particularly showing parts of the stopring and the plug frame;
Fig. 6B is a schematic perspective view showing the connected SC-type connector, particularly showing parts of the stopring and the plug frame;
Fig. 7 is a schematic cross sectional view showing relative positions of parts in a virtual assembly condition of Fig. 6A;
Fig. 8 is a schematic longitudinal sectional view showing the optical fiber connector unit according to a first embodiment of the present invention;
Fig. 9 is a schematic perspective view showing a locating member in the first embodiment;
Fig. 10 is a schematic longitudinal sectional view showing an end of a connected ferrule in the first embodiment shown in Fig. 8;
Fig. 11 is a schematic cross sectional view showing an optical fiber connector unit according to a second embodiment of the present invention;
Fig. 12 is a schematic longitudinal view showing an end of the connected ferrule in the second embodiment shown in Fig. 11;
Fig. 13A is a schematic perspective view showing a locating member in another embodiment of the present invention;
Fig. 13B is a schematic cross sectional view showing an incorporated locating member of Fig. 13A;
Fig. 14A is a schematic perspective view showing a locating member in another embodiment of the present invention;
Fig. 14B is a schematic cross sectional view showing the incorporated locating member of Fig. 14A;
Fig. 15 is a schematic longitudinal sectional view showing the optical fiber connector using the connector unit of Fig. 11;
Fig. 16A is a schematic cross sectional view showing an assembly process of the optical fiber connector of Fig. 15;
Fig. 16B is a schematic cross sectional view showing the assembly process of the optical fiber connector of Fig. 15;
Fig. 16C is a schematic cross sectional view showing the assembly process of the optical fiber connector of Fig. 15;

Hereinafter, the present invention will be described in more detailed by embodiments. However, the present invention should not be contoured as being limited thereto.

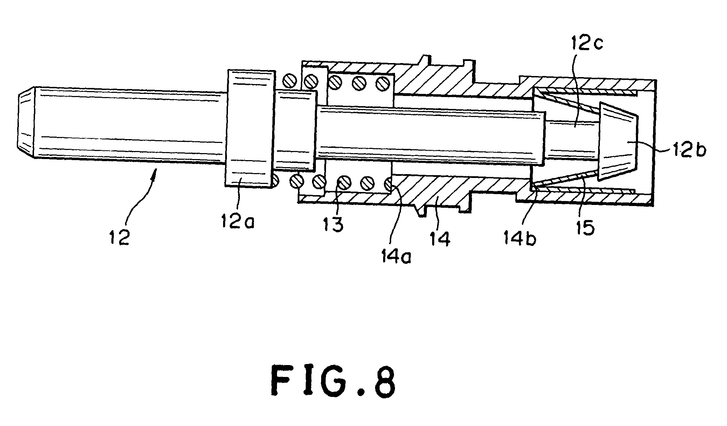

Fig. 8 is a schematic longitudinal sectional view showing a unit for the optical fiber connector according to a first embodiment of the present invention. This units comprises a ferrule 12, a spring 13, a stopring 14 and a locating member 15. As shown in Fig. 8, the ferrule 12 made of ceramics has a rear end, a coupling end, and a through hole for holding an optical fiber strand (not shown) of an optical fiber cord 1 (Figs. 6A to 6C) inserted from the rear end along a central axis of the ferrule, provided at two positions in the axial direction with first and second flanges 12a and 12b formed to have greater diameters than other portions.

The stopring 14 made of metal such as bronze is a cylindrical member having a step 14a on its inner peripheral surface, a tension member of the optical fiber cord 1 is connected to it in a connected condition.

The spring 13 has one end contacting with an end face of the first flange 12a of the ferrule 12, and the other end contacting with a first end face 14a of the stopring 14 for exerting a spring force towards the outside (to the left in the figure) of the stopring 14 along the axial direction of the ferrule 12.

The locating member 15, which will be described later in detail, is mounted on the inner peripheral surface of the stopring 14, and is adapted so that its tip contacts with an end face of the second flange 12b of the ferrule 12 for limiting movement of the ferrule 12 in a direction of decreasing spring force of the spring 13 (to the left in the figure), and allowing movement of the ferrule 12 in the reverse direction (to the right in the figure).

In the ferrule 12 of the present embodiment, a portion adjacent to the second flange 12b of the ferrule 12 is a small diameter portion 12c which has an even smaller diameter than the inner diameter at the tip of the locating member 15. Furthermore, the second flange 12b has a tapered surface gradually decreasing in diameter towards a direction (right in the figure) of increasing spring force of the spring 13.

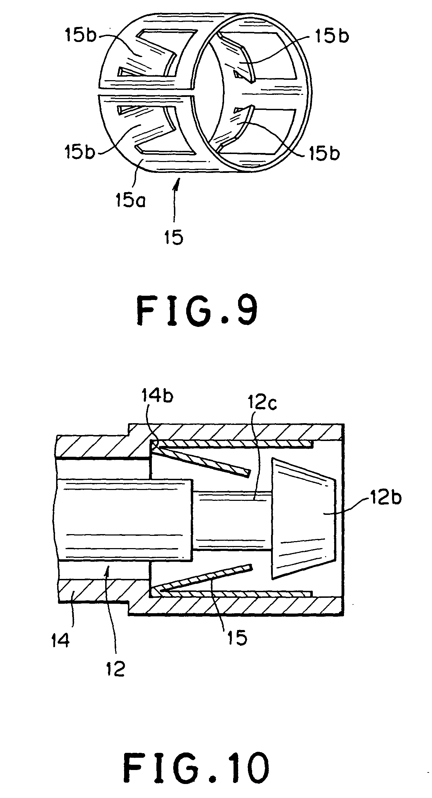

Fig. 9 is a schematic perspective view showing the locating member 15 of the present embodiment. As shown in Fig. 9, the locating member 15 formed of an elastic member such as phosphor bronze has a cylindrical portion 15a in which a portion of the cylinder is cut out parallel to the axial direction, and a plurality (four in the figure) of nibs 15b which project inclining in a direction (right direction in the figure) of increasing spring force of the spring 13 towards the center of the stopring 14, so that allowing the second flange 12b to pass, but limiting passing of the flange 22b once passed. Thus, the locating member 15 is mounted on the inner peripheral surface of the stopring 14 by its elasticity due to elastic deformation of the cylindrical portion 15a, and a tip of the nibs 15b contacts with the end face of the second flange 12b of the ferrule 12.

In the above embodiment, in a condition before connection as shown in Fig. 8, both end faces of the spring 13 are compressively deformed by the stopring 14 and the ferrule 12 to generate a pressure. As a result, since a pressure due to a repulsive force of the spring 13 is applied as pressurization to the tip of the locating member 15, relative positions of the individual parts are exactly determined by the pressurization. The parts assembled as in Fig. 8 are hereinafter referred to as an optical fiber connector unit.

When the optical fiber connector unit is mounted on the plug frame, since the spring 13 is further compressed to increase deformation, the second flange 12b as a rear end of the ferrule 12 is separated from the locating member 15 as shown in Fig. 10 so that the inner peripheral surface of the locating member 15 opposes the small diameter portion 12c, making both members non-contacting. Therefore, the ferrule 12 is released from binding of the locating member 15, achieving a floating condition which is the feature of the SC-type connector. Under this condition, even when the stopring 14 is dislocated by an external force, no external force is transmitted to the ferrule 12 through the locating member 15, and the stopring 14 and the ferrule 12 contact with each other only through the spring 13, thereby maintaining a flexible condition.

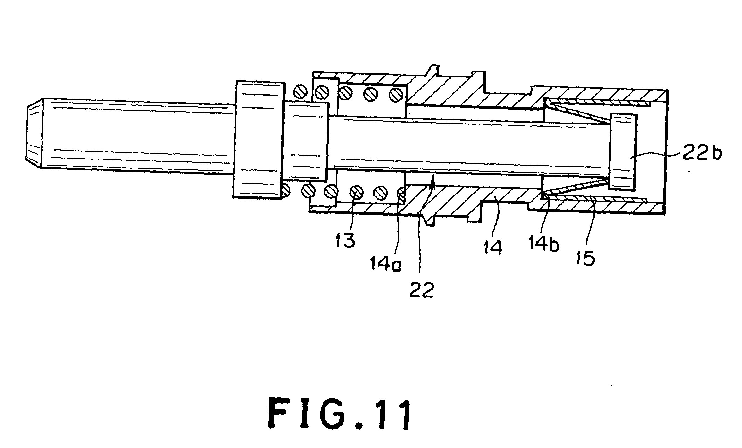

Fig. 11 is a schematic cross sectional view showing a second embodiment of the optical fiber connector unit. The second embodiment differs from the first embodiment in that the portion adjacent to a second flange 22b of a ferrule 22 differs in shape. That is, the ferrule does not include the small diameter portion 12c in the first embodiment.

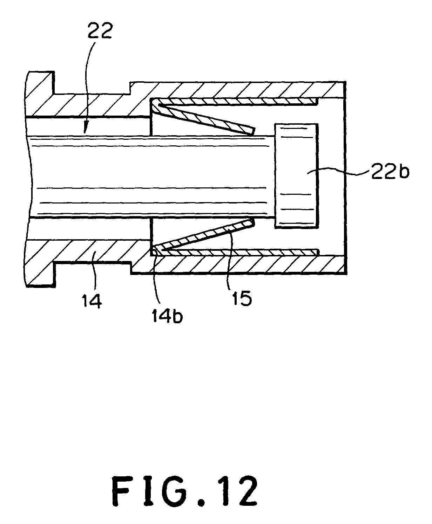

Fig. 12 is a schematic view showing relative positions of the stopring 14 and the second flange 22b of the ferrule 22 after normal assembly of the second embodiment.

In the second embodiment, unlike the first embodiment, even though contact is released between the locating member 15 and the ferrule 22 in the final assembly condition, the ferrule 22 is always in contact with the locating member 15. The stopring 14 and the ferrule 22 do not become non-contacting, not making a flowing structure in the strict sense. However, even with such an arrangement, when the nibs 15b of the locating member are formed to a small thickness, it is possible to set the spring constant of the nibs 15b to a sufficiently small value compared to that of the spring 13. That is, in the optical fiber connector unit of the second embodiment, the binding force which the locating member 15 exerts on the ferrule 22 when the stopring 14 is dislocated can be made sufficiently small compared to the binding force of the spring 13 to the ferrule 22, achieving a substantial floating mechanism.

Since the second embodiment where the locating member 15 is always in contact with the stopring 14 and the ferrule 22 is a structure which can reduce the man-power in the ferrule machining compared to the first embodiment, and a reduction in parts cost is possible. Further, since, in the optical fiber connector unit of the present embodiment, the locating member 15 contacts to press the outer peripheral surface of the ferrule 22 in the radial direction, the ferrule 22 is held at the center of the stopring 14. Therefore, it is easy to achieve automation of subsequent assembly work.

The above two embodiments use the locating member 15, but it is not limited to this. Any structure may be used in which the locating member contacts with the second flange 12b (or 22b) of the ferrule 12 (or 22) to limit movement in the axial direction of the ferrules 12 and 22 due to the spring force of the spring 13, but allow movement in the direction of increasing spring force.

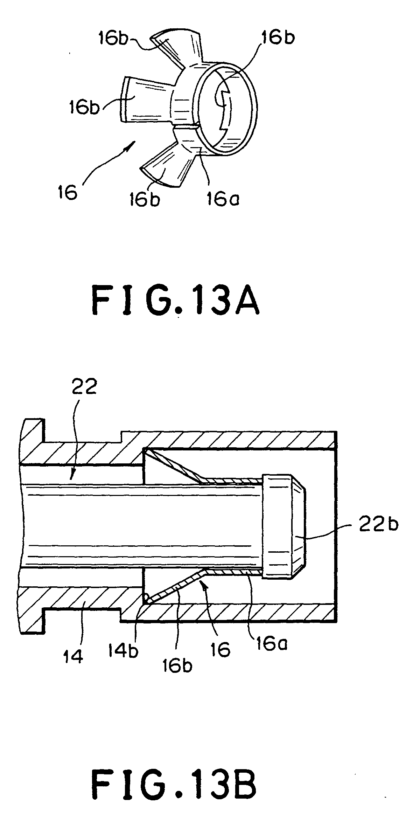

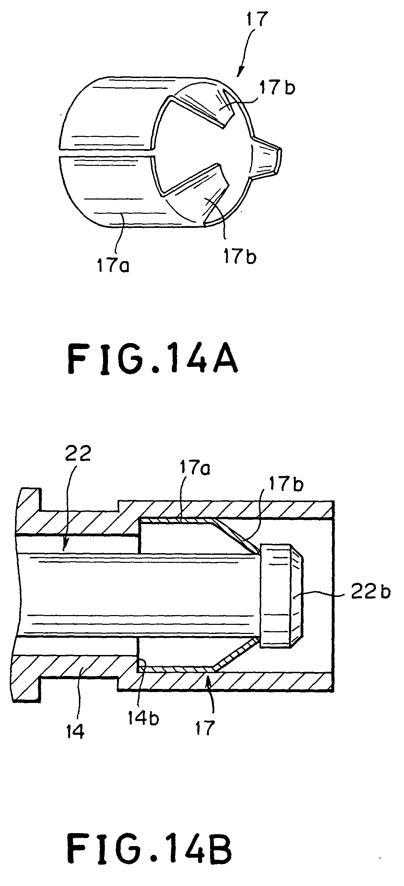

The locating member is not limited to one which is shown in Fig. 9, but may be, for example, one which is shown in Fig. 13A or 14A.

Fig. 13A is a schematic perspective view showing a locating member in another embodiment of the present invention, and Fig. 13B is a schematic cross sectional view showing the incorporated locating member of Fig. 13A. As shown in Fig. 13A, a locating member 16 comprises a cylindrical portion 16a which is formed by cutting out a portion of a cylinder parallel to the axial direction so that it elastically deforms to allow the second flange 12b of the ferrule 12 to pass, and a plurality (four in the figure) of nibs 16b integrally projecting from the cylindrical portion 16a towards the inner peripheral surface of the stopring 12. As shown in Fig. 13B, the locating member 16 is mounted on the outer peripheral surface of the ferrule 22 by its elasticity due to elastic deformation of the nibs 16b so that the cylindrical portion 16a contacts against the end face of the second flange 22b of the ferrule 22. The outer diameter of the tip of the nibs 16b is nearly the same as the inner diameter of the stopring 14 to position the ferrule 22 at nearly the center of the stopring 14, while maintaining the substantial floating mechanism. Of course, the locating member 16 can also be used for the above-described ferrule 12 as well.

Fig. 14A is a schematic perspective view showing a locating member in another embodiment of the present invention, and Fig. 14B is a schematic cross sectional view showing the incorporated locating member of Fig. 14A. A locating member 17 shown in Fig. 14A comprises a cylindrical portion 17a which is formed by cutting out a portion of a cylinder parallel to the axial direction, and a plurality (three in the figure) of nibs 17b provided at an end of the cylindrical portion 17a and projecting inward in the radial direction to the right in the figure. As shown in Fig. 14B, the nibs 17b allow the flange 22b of the ferrule 22 to pass, but limits passing of the flange 22b once passed in the reverse direction. Further, the inner diameter of the tips of the nibs 17b are nearly the same as the diameter of the outer peripheral surface of the ferrule 22 to position the ferrule 22 at nearly the center of the stopring 14, while maintaining he substantial floating mechanism. Of course, the locating member 17 can also be used for the above-described ferrule 12 as well.

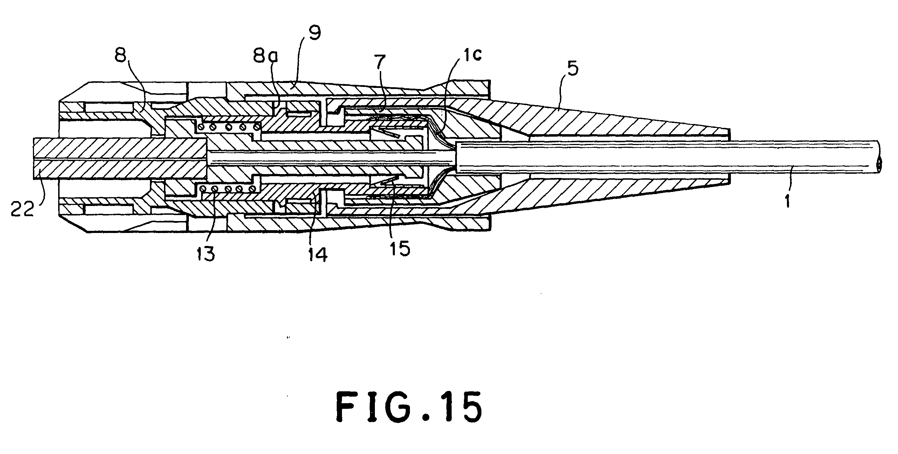

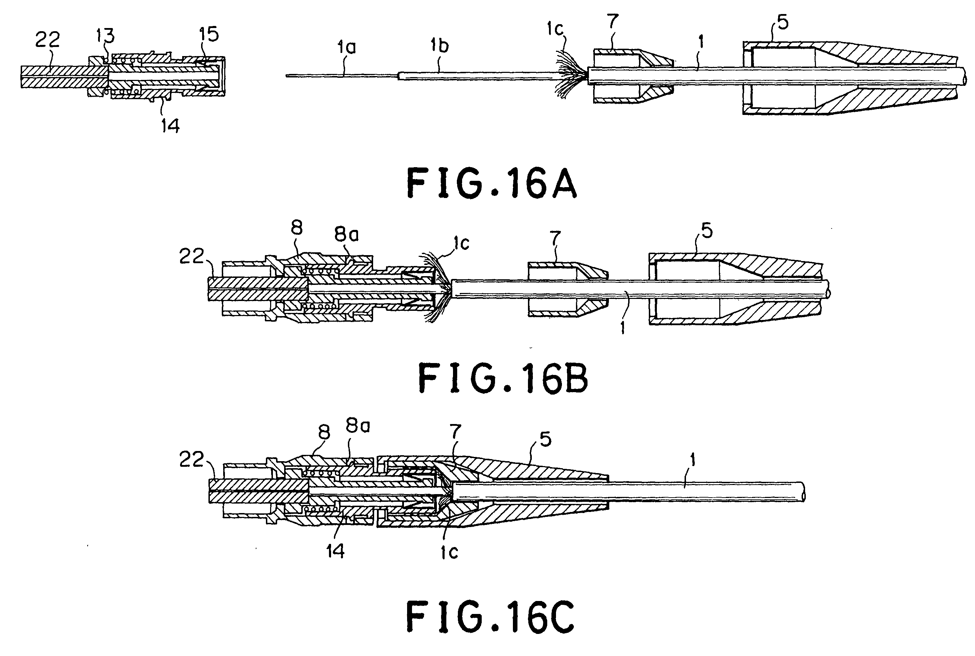

Fig. 15 is a schematic cross sectional view showing an optical fiber connector incorporating the optical fiber connector unit according to the second embodiment, and Figs. 16A to 16C are schematic cross sectional view showing the assembly process of the optical fiber connector of Fig. 15. Assembly process of the optical fiber connector will be described with reference to Figs. 16A to 16C.

First, as shown in Fig. 16A, a tip of the optical fiber cord 1 previously inserting to a boot 5, and a crimp ring 7 is pretreated by sheath removing, jacket removing, primary coat removing, and the like to expose an optical fiber 1a, an optical fiber strand 1b, and a tension member 1c. Then, the optical fiber cord 1 is bonded to the ferrule 22 of the optical fiber connector.

Then, after the tip of the ferrule 22 is polished to a convex-curved surface, as shown in Fig. 16B, a plug frame 8 is mounted to the ferrule 22. In this mounting, as described in the section of Prior Art (Fig. 2), while performing core-eccentricity adjusting of the ferrule, a projection 204a of a stopring 24 is engaged with a hole 208a of the plug frame 208, and both components are retained in a floating condition.

Finally, the tension member 1c is pinched between the rear end of the stopring 24 and the crimp ring 7, and the crimp ring 7 is then crimped, and the boot 5 is provided. Then, a coupling device 9 is mounted to complete the optical fiber connector shown in Fig. 15.

In the above-described embodiments, the locating member is mounted by elasticity on the inner peripheral surface of the stopring and abutted with the flange of the ferrule. However, on the contrary, an alternative construction may be used in which the locating member is mounted by elasticity on the outer peripheral surface of the ferrule and abutted to the flange on the inner peripheral surface of the stopring. For example, the locating member 16 of Fig. 13A is mounted to the ferrule 22 by elastic deformation of the cylindrical portion 16a, and the tips of the nibs 16b are abutted with a second end face 14b of the stopring 14 to construct a stable optical fiber connector. In this case, if the diameter of the tips of the nibs 16b and the inner diameter of the stopring 14 are nearly the same, positioning and floating mechanism of the ferrule can be assured.

As described above in detail with reference to the embodiment, since, in the optical fiber connector unit of the present invention, the stopring, the spring, and the ferrule are constructed to an integral structure using the locating member, parts can be easily controlled without losing the connection compatibility with conventional SC-type connectors. As a results, an automatic assembly line of optical fiber connector can be easily constructed, thereby achieving a reliable optical fiber connector of stable quality at a reduced cost. Further, in addition to the above effects, the assembly work can be simplified when the present embodiment is applied in manual assembly, particularly in the field assembly with poor work environment.

The present invention has been described in detail with respect to preferred embodiments, and it will now be that changes and modifications may be made without departing from the invention in its broader aspects, as it is defined in the appended claims.

## Claims

1. An optical fiber connector unit comprising:
a ferrule (12) having a rear end, a coupling end, and a through hole for holding an optical fiber strand (1) inserted from the rear end along a central axis of the ferrule, said ferrule including a first flange (12a) formed to constitute the outer diameter of the ferrule (12) and having a radially extending end face facing the rear end, and a second flange (12b, 22b) provided at a rear end side of said first flange (12a) and having a second radially extending flange end face opposing said first flange end face;
a stopring (14) as a cylindrical member provided outside of a part of said ferrule (12), having on its inner peripheral surface a first step having a radially extending first end face (14a) opposing said first flange end face of said ferrule and a second step having a second radially extending end face (14b) opposing said second flange end face of said ferrule;
a coil spring (13) having one end contacting with said first flange end face of said ferrule and another end contacting with said first end face (14a) of said stopring (14), exerting a spring force on said ferrule in an axial direction so as to urge the ferrule out of said stopring; and
a ring-shaped locating member (15, 16, 17) coaxially provided between said stopring and said ferrule, having a first stopper contacting with said radially extending second end face (14b) of said stopring, and a second stopper contacting with said second radially extending flange end face of said ferrule, said second stopper allowing a passage of said second flange (12b, 22b) of said ferrule in a direction of increasing spring force of said coil spring (13) but limiting a passage of said second flange (12b, 22b) in the direction of decreasing spring force, said second stopper being apart from said second flange of said ferrule after assembly of the ferrule and the stopring to allow the ferrule to float inside the stopring, said locating member limiting relative movement of said stopring and said ferrule in a direction of decreasing spring force, said locating member (15, 16, 17) being pressed and mounted to said stopring or said ferrule by an elastic deformation of said first stopper or said second stopper.

2. An optical fiber connector unit as claimed in claim 1, wherein said first stopper of said locating (15, 17) member comprises a cylindrical portion (15a, 17a) with a portion cut out parallel to the axial direction, said second stopper comprises a plurality of nibs (15b, 17b) projecting inclining towards inside in the radial direction from said cylindrical portion along a direction towards the rear end of said ferrule and capable of elastic deformation for allowing said second flange of said ferrule to pass in a direction of increasing spring force.

3. An optical fiber connector unit as claimed in claim 2, wherein said locating member (15, 17) is pressed on an inner peripheral surface of said stopring by elastic deformation of said cylindrical portion (15a, 17a).

4. An optical fiber connector unit as claimed in claim 2, wherein said nibs (15b) of said locating member are formed on said cylindrical portion by cutting out halfway said cylindrical portion.

5. An optical fiber connector unit as claimed in claim 2, wherein said nibs (17b) of said locating member are formed projecting from one end of said cylindrical portion.

6. An optical fiber connector unit as claimed in claim 1, wherein said second stopper of said locating member (16) comprises a cylindrical portion (16a) with a portion cut out parallel to the axial direction and capable of elastic deformation for allowing said second flange of said ferrule to pass in a direction of increasing spring force, and said
first stopper comprises a plurality of nibs (16b) projecting inclining towards outside in the radial direction from said cylindrical portion along a direction towards the coupling end of said ferrule.

7. An optical fiber connector unit as claimed in claim 6, wherein said locating member (16) is pressed on an inner peripheral surface of said stopring by elastic deformation of said nibs (16b).

8. An optical fiber connector unit as claimed in claim 6, wherein said locating member (16) is pressed on an outer peripheral surface of said ferrule by elastic deformation of said cylindrical portion (16a).

9. An optical fiber connector comprising:
an optical fiber connector unit according to claim 1;
an optical fiber cord (1) having an optical fiber mounted to said ferrule;
a crimp ring (7) for bonding a tension member (1c) of said optical fiber cord (1) to a rear end of said stopring;
a boot (5) for covering said crimp ring bonded to the rear end of said stopring; and
a plug frame (8) engaging with an outer periphery of said stopring.

10. An optical fiber connector as claimed in claim 9, further comprising a coupling device engaged with an outer periphery of said plug frame.

## Patentansprüche

1. Lichtleitfaserverbindereinheit mit:
einer Zwinge (12) mit einem Hinterende, einem Kupplungsende und einem Durchgangsloch zum Halten eines Lichtleitfaserstrangs (1), der vom Hinterende entlang einer Mittelachse der Zwinge eingefügt ist, wobei die Zwinge einen ersten Flansch (12a), der ausgebildet ist, den Außendurchmesser der Zwinge (12) zu bilden, und eine sich radial erstreckende Endfläche aufweist, die zum Hinterende zeigt, und einen zweiten Flansch (12b, 22b) umfasst, der auf einer Hinterendseite des ersten Flanschs (12a) vorgesehen ist und eine zweite sich radial erstreckende Flanschendfläche aufweist, die der ersten Flanschendfläche gegenüberliegt;
einem Anschlagring (14) als ein außerhalb eines Teils der Zwinge (12) vorgesehenes zylindrisches Bauteil, der auf seiner inneren Randfläche einen ersten Absatz mit einer sich radial erstreckenden ersten Endfläche (14a), die der ersten Flanschendfläche der Zwinge gegenüberliegt, und einen zweiten Absatz mit einer zweiten sich radial erstreckenden Endfläche (14b) aufweist, die der zweiten Flanschendfläche der Zwinge gegenüberliegt;
einer Schraubenfeder (13) mit einem Ende, das die erste Flanschendfläche der Zwinge berührt, und einem anderen Ende, das die erste Endfläche (14a) des Anschlagrings (14) berührt, wobei die Schraubenfeder eine Federkraft in Axialrichtung auf die Zwinge ausübt, um die Zwinge aus dem Anschlagring zu drücken; und
einem koaxial zwischen dem Anschlagring und der Zwinge vorgesehenen ringförmigen Fixierbauteil (15, 16, 17) mit einem ersten die Anschlag, der die zweite sich radial erstreckende Endfläche (14b) des Anschlagrings berührt, und einem zweiten Anschlag, der die zweite sich radial erstreckende Flanschendfläche der Zwinge berührt, wobei der zweite Anschlag einen Durchgang des zweiten Flanschs (12b, 22b) der Zwinge in einer Richtung sich erhöhender Federkraft der Schraubenfeder (13) erlaubt, aber einen Durchgang des zweiten Flanschs (12b, 22b) in der Richtung sich verringernder Federkraft begrenzt, und der zweite Anschlag nach dem Zusammenbau der Zwinge und des Anschlagrings vom zweiten Flansch der Zwinge entfernt ist, um der Zwinge ein Seitenspiel innerhalb des Anschlagrings zu erlauben, wobei das Fixierbauteil eine relative Bewegung des Anschlagrings und der Zwinge in einer Richtung sich verringernder Federkraft begrenzt, und wobei das Fixierbauteil (15, 16, 17) durch eine elastische Verformung des ersten Anschlags und des zweiten Anschlags an den Anschlagring oder die Zwinge gepresst und daran befestigt ist.

2. Lichtleitfaserverbindereinheit nach Patentanspruch 1, wobei der erste Anschlag des Fixierbauteils (15, 17) einen zylindrischen Abschnitt (15a, 17a) mit einem parallel zur Axialrichtung ausgeschnittenen Abschnitt aufweist, und der zweite Anschlag eine Mehrzahl von Haken (15b, 17b) aufweist, die vom zylindrischen Abschnitt entlang einer Richtung zum Hinterende der Zwinge hin in Radialrichtung nach innen geneigt vorstehen und sich elastisch verformen können, um dem zweiten Flansch der Zwinge zu erlauben, in einer Richtung sich erhöhender Federkraft durchzutreten.

3. Lichtleitfaserverbindereinheit nach Patentanspruch 2, wobei das Fixierbauteil (15, 17) durch elastische Verformung des zylindrischen Abschnitts (15a, 17a) an eine innere Randfläche des Anschlagrings gepresst ist.

4. Lichtleitfaserverbindereinheit nach Patentanspruch 2, wobei die Haken (15b) des Fixierbauteils auf dem zylindrischen Abschnitt durch Ausschneiden des zylindrischen Abschnitts auf einer halben Länge ausgebildet sind.

5. Lichtleitfaserverbindereinheit nach Patentanspruch 2, wobei die Haken (17b) des Fixierbauteils von einem Ende des zylindrischen Abschnitts vorstehend ausgebildet sind.

6. Lichtleitfaserverbindereinheit nach Patentanspruch 1, wobei der zweite Anschlag des Fixierbauteils (16) einen zylindrischen Abschnitt (16a) mit einem Abschnitt aufweist, der parallel zur Axialrichtung ausgeschnitten ist und sich elastisch verformen kann, um dem zweiten Flansch der Zwinge zu erlauben, in einer Richtung sich erhöhender Federkraft durchzutreten, und der erste Anschlag eine Mehrzahl von Haken (16b) aufweist, die vom zylindrischen Abschnitt entlang einer Richtung zum Kupplungsende der Zwinge hin in radialer Richtung nach außen geneigt vorstehen.

7. Lichtleitfaserverbindereinheit nach Patentanspruch 6, wobei das Fixierbauteil (16) durch elastische Verformung der Haken (16b) an eine innere Randfläche des Anschlagrings gepresst ist.

8. Lichtleitfaserverbindereinheit nach Patentanspruch 6, wobei das Fixierbauteil (16) durch elastische Verformung des zylindrischen Abschnitts (16a) an die äußere Randfläche der Zwinge gepresst ist.

9. Lichtleitfaserverbinder mit:
einer Lichtleitfaserverbindereinheit nach Patentanspruch 1;
einem Lichtleitfaserkabel (1) mit einer an der Zwinge befestigten Lichtleitfaser;
einem Crimp-Ring (7) zum Binden eines Spannungsbauteils (1c) des Lichtleitfaserkabels (1) an ein Hinterende des Anschlagrings;
einer Schutzmanschette (5) zum Abdecken des an das Hinterende des Anschlagrings gebundenen Crimp-Rings; und
einem Steckverbindungsrahmen (8), der mit einem äußeren Rand des Anschlagrings in Eingriff ist.

10. Lichtleitfaserverbinder nach Patentanspruch 9, außerdem mit einer Kupplungsvorrichtung, die mit einem äußeren Rand des Steckverbindungsrahmens in Eingriff ist.

## Revendications

1. Unité de connecteur de fibre optique, comprenant :
une virole (12) ayant une extrémité arrière, une extrémité de couplage, et un trou débouchant destiné à maintenir un brin (1) de fibre optique inséré depuis l'extrémité arrière, le long de l'axe central de la virole, la virole ayant un premier flasque (12a) formé afin qu'il détermine le diamètre externe de la virole (12) et ayant une face radiale d'extrémité tournée vers l'extrémité arrière, et un second flasque (12b, 22b) placé du côté de l'extrémité arrière du premier flasque (12a) et ayant une seconde face d'extrémité radiale de flasque opposée à la première face d'extrémité de flasque,
une bague d'arrêt (14) sous forme d'un organe cylindrique placé à l'extérieur d'une partie de la virole (12), ayant, à sa surface périphérique interne, un premier gradin qui a une première face radiale d'extrémité (14a) opposée à la première face d'extrémité de flasque de la virole et un second gradin ayant une seconde face radiale d'extrémité (14b) opposée à la seconde face d'extrémité de flasque de la virole,
un ressort hélicoïdal (13) ayant une première extrémité au contact de la première face d'extrémité de flasque de la virole et une autre extrémité au contact de la première face d'extrémité (14a) de la bague d'arrêt (14), exerçant une force élastique sur la virole dans la direction axiale afin que la virole soit poussée hors de la bague d'arrêt, et
un organe de positionnement de forme annulaire (15, 16, 17) disposé coaxialement entre la bague d'arrêt et la virole, ayant un premier organe d'arrêt au contact de la seconde face radiale d'extrémité (14b) de la bague d'arrêt, et un second organe d'arrêt placé au contact de la second face radiale d'extrémité de flasque de la virole, le second organe d'arrêt permettant un passage du second flasque (12b, 22b) de la virole dans la direction de l'augmentation de la force d'élasticité du ressort hélicoïdal (13) mais limitant le passage du second flasque (12b, 22b) dans le sens de la réduction de la force d'élasticité, le second organe d'arrêt étant distant du second flasque de la virole après l'assemblage de la virole et de la bague d'arrêt pour permettre à la virole de flotter à l'intérieur de la bague d'arrêt, l'organe de positionnement limitant le déplacement relatif de la bague d'arrêt et de la virole dans le sens qui réduit la force d'élasticité, l'organe de positionnement (15, 16, 17) étant poussé et monté sur la bague d'arrêt ou sur la virole par déformation élastique du premier organe d'arrêt ou du second organe d'arrêt.

2. Unité de connecteur de fibre optique selon la revendication 1, dans laquelle premier organe d'arrêt de l'organe de positionnement (15, 17) comprend une partie cylindrique (15a, 17a) ayant une partie découpée parallèlement à la direction axiale, le second organe d'arrêt comprend plusieurs pointes (15b, 17b) en saillie, inclinées vers l'intérieur dans la direction radiale depuis la partie cylindrique vers l'extrémité arrière de la virole et pouvant être déformées élastiquement afin que le second flasque de la virole puisse passer dans le sens d'augmentation de la force d'élasticité.

3. Unité de connecteur de fibre optique selon la revendication 2, dans laquelle l'organe de positionnement (15, 17) est poussé sur une surface périphérique interne de la bague d'arrêt par déformation élastique de la partie cylindrique (15a, 17a).

4. Unité de connecteur de fibre optique selon la revendication 2, dans laquelle les pointes (15b) de l'organe de positionnement sont formées sur la partie cylindrique par découpe de la partie cylindrique sur sa moitié.

5. Unité de connecteur de fibre optique selon la revendication 2, dans laquelle les pointes (17b) de l'organe de positionnement sont formées afin qu'elles dépassent d'une première extrémité de la partie cylindrique.

6. Unité de connecteur de fibre optique selon la revendication 1, dans laquelle le second organe d'arrêt de l'organe de positionnement (16) comprend une partie cylindrique (16a) ayant une partie découpée parallèlement à la direction axiale et pouvant être déformée élastiquement afin qu'elle permette le passage du second flasque de la virole dans le sens de l'augmentation de la force d'élasticité, et le premier organe d'arrêt comporte plusieurs pointes (16b) qui dépassent en direction inclinée vers l'extérieur dans la direction radiale de la partie cylindrique dans la direction de l'extrémité de couplage de la virole.

7. Unité de connecteur de fibre optique selon la revendication 6, dans laquelle l'organe de positionnement (16) est poussé sur une surface périphérique interne de la bague d'arrêt par déformation élastique des pointes (16b).

8. Unité de connecteur de fibre optique selon la revendication 6, dans laquelle l'organe de positionnement (16) est poussé sur une surface périphérique externe de la virole par déformation élastique de la partie cylindrique (16a).

9. Connecteur de fibre optique comprenant :
une unité de connecteur de fibre optique selon la revendication 1,
un cordon (1) à fibre optique ayant une fibre optique montée sur la virole,
une bague de sertissage (7) destinée à lier un organe de tension (1c) du cordon (1) à fibre optique à une extrémité arrière de la bague d'arrêt,
un sabot (5) destiné à recouvrir la bague de sertissage liée à l'extrémité arrière de la bague d'arrêt, et
un châssis (8) d'enfichage coopérant avec la périphérie externe de la bague d'arrêt.

10. Connecteur de fibre optique selon la revendication 9, comprenant en outre un dispositif de couplage coopérant avec la périphérie externe du châssis d'enfichage.
